# EUROPEAN PATENT SPECIFICATION

(11) **EP 3 099 177 B1**
(45) Date of publication and mention of the grant of the patent: **06.03.2019**
(21) Application number: 15707045.9
(22) Date of filing: 27.01.2015
(51) Int. Cl.: A21D 13/31, A21D 13/16

(54) **PROCESS FOR THE PRODUCTION OF A BAKERY PRODUCT**
VERFAHREN ZUR HERSTELLUNG EINER BACKWARE
PROCÉDÉ POUR LA PRODUCTION D'UN PRODUIT DE BOULANGERIE

(30) Priority: 28.01.2014 IT MI20140107
(43) Date of publication of application: 07.12.2016
(73) Proprietor: Unigel S.A.S. di Claudio Zanaglio & C., 25020 Alfianello (BS) (IT)
(72) Inventor: ZANAGLIO, Claudio, I-25123 Brescia (IT)
(74) Representative: Ferreccio, Rinaldo
(86) International application number: PCT/EP2015/051558
(87) International publication number: WO 2015/113950

(56) References cited:
- EP-A1- 0 353 036
- EP-A1- 0 445 850
- EP-A2- 0 305 071
- EP-A2- 0 326 404
- WO-A2-01/45515
- US-A- 5 180 603
- DATABASE GNPD [Online] MINTEL; December 2013 (2013-12), Anonymous: "Cocktail Danish Pastries", XP002723765, Database accession no. 2262096
- Anonymous: "Cindystar: Pan de Hojaldre", , 10 January 2010 (2010-01-10), pages 1-10, XP055115587, Retrieved from the Internet: URL:http://cindystarblog.blogspot.de/2010/ 01/pan-de-hojaldre.html [retrieved on 2014-04-28]

## Description

### Field of application

The present invention relates to the food industry sector.

In particular, the invention relates to a process for the production of new type of bakery product.

### Prior Art

During the last few decades mass retailing has increased significantly and at the same time there has been an increase in the production of bread and other bakery products, such as pizzas, flat bread, croissants, brioches, etc., on an industrial scale.

These bakery products often are supplied to supermarkets or hypermarkets in a frozen pre-formed - in some cases pre-baked - state ready for baking at the sales outlet.

The range of these products is fairly extensive and closely resembles that of similar artisanally produced bakery products.

These products include bread, in its various formats (large-size loafs, bread rolls, baguettes, ciabatta bread, etc.), which are intended to accompany main meals or which are filled with both savoury and sweet ingredients (e.g. cheese, salami, marmalade, etc.), and sweet bakery products, such as croissants and brioches, which are eaten mainly for breakfast or as snacks.

The process for production of the aforementioned frozen pre-formed products is known and an example of this process is provided in the patent application EP 2 256 775.

As is known, one of the most widely appreciated organoleptic characteristics of bread is the crispiness of its crust, while in the case of croissants, from a taste point of view, the flaky and soft texture is particularly liked.

Patent application FR 2 640 470 discloses a process for producing a bakery product with a hard crust and soft inner similar to that of a brioche, which comprises a step for kneading a first mixture comprising at least wheat flour, water, salt and yeast, a first leavening step for about one hour, a step of incorporating into the mixture thus obtained a second mixture comprising at least wheat flour, water, salt, yeast, egg and margarine; a kneading step, a second leavening step and baking in an oven.

EP 0 326 404 A2 discloses the production of bakery products, wherein a dough is made by kneading a mixture comprising water, yeast, sugar, salt, flour, which is laminated to obtain a sheet of dough of a predetermined thickness, a fat layer is applied on said dough sheet, which is then folded and rolled and finally shaped into croissant-shape and finally fermented. The content of fat of the dough sheet is not specified.

EP 0 353 036 A1 discloses a method to produce dough for bakery products, in which ingredients comprising flour, water, yeast, salt and sugar are mixed and kneaded to a dough. A resting step follows the kneading, then the dough is stretched into a dough sheet, fat is applied onto the dough surface and then the dough is folded to create layers and formed into a sheet again and is shaped into a desired form, such as croissant shape, without any resting step prior to the shaping step. The shaped dough is then fermented, possibly frozen, and finally baked. The content of fat of the dough sheet is not specified.

EP 0 305 071 A2 discloses a method to produce preproofed unbaked bakery products, in which ingredients comprising flour, water, yeast, salt and sugar are mixed and kneaded to a dough, which is rolled into a sheet, fat is applied onto said sheet, which is folded; the dough is left for resting and then sheeted again and shaped into a croissant shape and finally proofed; after proofing, the dough products are frozen and baked. There is no resting step before the shaping step. A croissant dough is exemplified (example 2), in which butter is contained as the roll-in fat, in an amount of 18,2% by weight of the dough sheet.

WO 01/45515 A2 discloses a method for the production of bakery products, such as croissants, in which which ingredients comprising flour, water, yeast, salt and sugar are mixed and kneaded to a dough, which is rolled into a sheet, fat, such as margarine, is incorporated by folding and the laminated dough is further processed into croissant shaped dough pieces, which are fermented, frozen and finally baked. An amount of fat as high as 35-40% by weight on the flour weight is used and no resting step prior to the shaping step is envisaged.

US 5 180 603 discloses a method for producing bakery products having a layered structure, comprising steps of mixing and kneading ingredients comprising flour, water, yeast, salt and sugar into a dough, processing the dough into a sheet and rolling in fat and then laminating the dough sheet and processing it into a desired thickness. Then the dough is cut into triangular pieces, which are molded into croissant-shape. An example is provided in which croissants are produced from a dough containing 25% by weight roll-in margarine.

EP 0 445 850 A1 discloses a method for producing laminated doughs, in which ingredients comprising flour, water, yeast, salt and sugar are mixed and kneaded into a dough, which is then further processed into a sheet, wherein margarine is incorporated by folding. The dough is then shaped into croissants, which are then proofed and directly baked or frozen before being baked. The amount of fat used in the preparation of the croissant dough is of 300-500 g per 500 g of flour and the amount of margarine used for the dough of example 1 is about 19% b.w. of the dough weight.

### Summary of the invention

One object of the present invention is that of providing a new type of bakery product which has both the organoleptic/ structural characteristics which are most appreciated in bread and croissants and which could also be suitable for the uses which are typical of the two bakery products mentioned, namely for accompanying meals or for being filled in the same manner as bread, or for being used as such for breakfast or as a snack, as an alternative to croissants.

This object has been achieved by means of a process for the production of a bakery product having an inner part with a croissant-like texture and a crust similar to that of bread, which comprises the steps of:
a) kneading a mixture comprising wheat flour, water, salt, sugar, yeast;
b) rolling the dough obtained from step a) to obtain a sheet of dough of a predetermined thickness;
c) incorporating into said sheet of dough at least one vegetable fat by means of folding and rolling operations;
d) subjecting the dough obtained from step c), after restoring said predetermined thickness, to shaping operations similar to those used in the production of croissant, thus obtaining croissant-shaped semifinished products;
e) subjecting said semifinished products to leavening;
wherein said at least one vegetable fat constitutes from 10.0 to 14.0% by weight of the total weight of said sheet of dough obtained from step c) and wherein said sugar is sucrose and constitutes from 2.0 to 4.0% by weight of the total weight of said sheet of dough obtained from step c).

The at least one vegetable fat preferably constitutes from 11.0 to 14.0%, conveniently from 12.0 to 13.0%, by weight of the total weight of said sheet of dough obtained from step c).

The process according to the invention may comprise a final step of baking in an oven.

According to one aspect thereof, the process according to the invention further comprises a freezing step after the leavening step.

The process according to the invention may also comprise a rest step c') at the end of the folding and rolling operations of step c) and before said shaping step d).

This rest step has preferably a duration of between 7 and 12 minutes.

The process according to the present invention may further comprise a step d'), in which oblique cuts are made on the surface of the said semifinished products.

The said at least one vegetable fat preferably consists of a mixture of vegetable fats and oils suitable for the production of rolled doughs ("vegetable roll-in fats/oils"), in particular a vegetable margarine. Particularly preferred is a "roll-in"-type vegetable margarine, free from hydrogenated fats.

The aforementioned yeast is preferably brewer's yeast or sourdough starter and is present in the sheet of dough referred to in step c) in an amount preferably between 1.0 and 3.0 % by weight of the total weight.

The mixture of step a) may contain further ingredients, such as malt, bran, cereal flakes, linseed, sesame seeds, sunflower seeds, soya seeds. The malt is preferably present in the sheet of dough referred to in step c) in an amount comprised between 0.5 and 3.5% and consists of malted soft-wheat flour.

The wheat flour is preferably of the type "0".

The mixture in step a) may further comprise food additives commonly used in the production of bakery products and in particular bakery improvers, such as malted and non-malted natural bioactivators.

The product obtained by means of the process according to the present invention following baking in an oven has a crispy crust entirely similar to that of bread and a flaky inner structure similar to that of a croissant, the softness of which offers a pleasing contrast to the crispiness of the crust.

The content of simple sugars in the aforementioned product is around 5-7% by weight of the total weight of the product, namely is markedly less than that of a croissant, which is not less than 12%.

The fat content of the aforementioned product is between 7.0 and 10.0% by weight of the total weight of the product, markedly less than the fat content of a croissant which varies from 20% to 30% by weight of the total weight.

Owing to these organoleptic and nutritional properties the product obtained with the method according to the present invention is suitable for various uses by a consumer. It may in fact be used as an alternative to conventional bread, compared to which it retains substantially unaltered the characteristics of crispiness of the crust and has a soft inner part with a texture which is particularly pleasing for the palate owing to its soft and flaky structure.

The slight sweetness of the product in question, resulting from the small amount of sugar contained in it, pleasantly harmonizes with the taste of savoury foods such as cheese and salami, together which it can be consumed.

The product obtained by means of the process according to the present invention may also be used as an alternative to classic croissants, having the same attractive taste provided by its flaky structure, while it has a lower content of simple sugars and fats and smaller amount of calories (about 270-280 Kcal per 100g compared to the approximately 400 Kcal per 100 g of a croissant).

### Brief description of the drawings

Figure 1 shows a photograph of a bakery product obtained by means of the process according to the present invention.
Figure 2 shows a photograph of another bakery product obtained by means of the process according to the present invention.

### Detailed description

**EXAMPLE 1 - Soft-wheat bread**

| | |
|---|---|
| Type "0" soft-wheat flour | 100.00 kg |
| Water | 54.00 kg |
| Margarine | 25.00 kg |
| Sugar | 6.00 kg |
| Brewer's yeast | 3.00 kg |
| Salt | 2.35 kg |
| Malted soft-wheat flour | 1.80 kg |

The ingredients listed above, except for margarine, were placed inside a double-spiral kneading machine. After about 10 minutes' operation of the kneading machine a homogeneous mixture was obtained and transferred to an extruder, at the output of which a continuous strip of dough sheet with a thickness of about 5 cm was obtained. This dough sheet was fed to a multi-roller rolling machine in order to reduce the thickness to about 1.5 cm.

A layer of margarine was continuously deposited on the central zone of the continuous dough sheet output from the rolling machine and transported by a conveyor belt. The edges of the continuous dough sheet not covered by the layer of margarine were folded over onto the latter, thus obtaining a continuous dough sheet with a larger thickness and smaller width.

This latter dough sheet, still transported by a conveyor belt, was transferred to a second multi-roller rolling machine in order to restore the previous thickness of about 1.5 cm and the original width.

The dough sheet output by this second rolling machine, still carried on a conveyor belt, was fed to a folding station where a so-called "triple fold" was performed, following which it was fed to a third multi-roller rolling machine in order to reduce its thickness again to about 1.5 cm.

At this point the strip of dough sheet was allowed to rest for a period of about 10 minutes while travelling on the conveyor belt towards the shaping station. Here the dough sheet was reduced into triangular portions which were subjected to a further reduction in thickness inside a rolling machine. Then the triangular sheet portions, with a thickness of about 0.2 mm, were rolled up to form semifinished products in the form of croissant and placed on baking trays.

The baking trays containing the aforementioned semifinished products, once loaded onto a conveyor belt, were conveyed to a cutting station where each semifinished product was subjected to the action of two blades lowered from above onto it so as to form two parallel and oblique grooves on its upper surface.

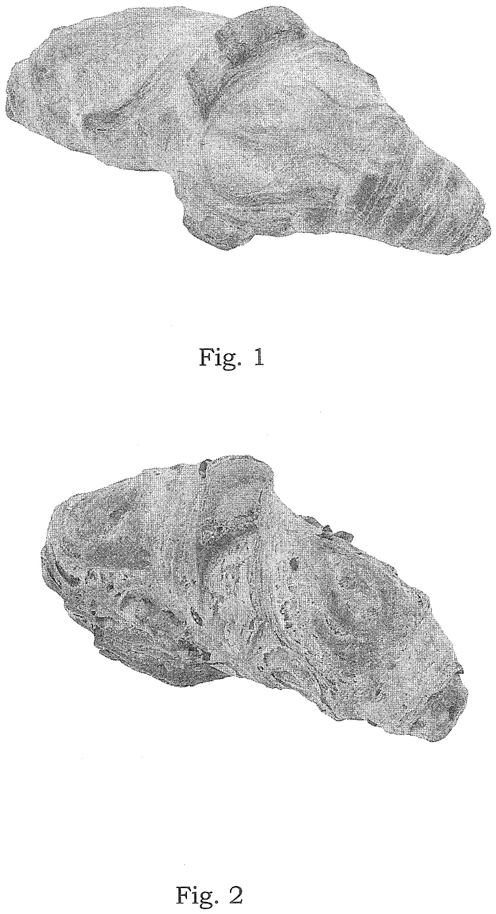

The two grooves formed on the surface of the semifinished product have the purpose of providing the final bakery product with the desired shape which, as can be noted from Figure 1, resembles that of a small loaf.

The baking trays containing the semifinished products output from the cutting station were introduced into a leavening station and kept inside it for 75 minutes at a temperature of 30°C and with a relative humidity of 77%.

Once this period had lapsed, the baking trays were extracted from the leavening chamber and most of them were directed to a conventional freezing step followed by a step of packaging the frozen semifinished products.

Some of the baking trays instead underwent a baking step in an oven at 175°-180° for about 22-24 minutes.

The final product output from the oven, after cooling down to room temperature, had the shape shown in Figure 1 and was characterized by the presence of a crispy crust together with a very soft inner part with a flaky structure.

Baking in an oven, again at 175°-180°C for 22-24 minutes, of the frozen semifinished products mentioned above resulted in a final product having characteristics identical to that obtained by means of direct baking of the semifinished products obtained from the leavening step.

**EXAMPLE 2 - Soft wheat bread with cereals**

| | |
|---|---|
| Type "0" soft-wheat flour | 140.00 kg |
| Water | 76.00 kg |
| Margarine | 38.00 kg |
| Mixture of seeds (*) | 14.00 kg |
| Sugar | 8.40 kg |
| Malted soft-wheat flour | 7.00 kg |
| Brewer's yeast | 4.00 kg |
| Salt | 3.30 kg |

| | |
|---|---|
| (*) The mixture of seeds consisted of linseed, peeled sesame seeds, sunflower seeds, soya seeds and oatmeal. | |

As for the previous example, firstly a mixture was prepared with all the ingredients listed above, except for margarine, and then exactly the same procedure as in Example 1 was followed, obtaining, after baking in an oven, a bakery product with the appearance shown in Figure 2.

The bakery product in question was also characterized by the presence of a crispy crust together with a very soft inner part with a flaky structure.

## Claims

1. A process for the production of a bakery product having an inner part with a croissant-like texture and a crust similar to that of bread, which comprises the steps of:
a) kneading a mixture comprising wheat flour, water, salt, sugar, yeast;
b) rolling the dough obtained from step a) to obtain a sheet of dough of a predetermined thickness;
c) incorporating into said sheet of dough at least one vegetable fat by means of folding and rolling operations;
d) subjecting the dough sheet obtained from step c), after restoring said predetermined thickness, to shaping operations, thus obtaining croissant- shaped semifinished products;
e) subjecting said semifinished products to leavening; wherein said at least one vegetable fat constitutes from 10.0 to 14.0 % by weight of the total weight of said sheet of dough obtained from step c) and wherein said sugar is sucrose and constitutes from 2.0 to 4.0% by weight of the total weight of said sheet of dough obtained from step c).

2. The process according to claim 1, wherein said at least one vegetable fat constitutes from 11.0 to 14.0%, preferably from 12.0 to 13.0%, by weight of the total weight of said sheet of dough obtained from step c).

3. The process according to claim 1 or 2, comprising a final step of baking in an oven.

4. The process according to any one of claims 1 to 3, which further comprises a freezing step after the leavening step.

5. The process according to any one of claims 1-4, comprising a rest step c') at the end of the folding and rolling operations of step c) and before said shaping step d).

6. The process according to claim 5, wherein said rest step c') has a duration of between 7 and 12 minutes.

7. The process according to any one of the preceding claims, comprising a step d'), in which oblique cuts are made on the surface of said semifinished products.

8. The process according to any one of the preceding claims, wherein said at least one vegetable fat consists of a mixture of vegetable fats and oils suitable for the production of rolled doughs ("vegetable roll-in fats/oils"), preferably a vegetable margarine, and in particular a "roll-in"-type vegetable margarine, free from hydrogenated fats.

9. The process according to any one of the preceding claims, wherein said yeast is brewer's yeast or sourdough starter and is present in the sheet of dough referred to in step c) in an amount preferably comprised between 1.0 and 3.0 % by weight of the total weight.

10. The process according to any one of the preceding claims, wherein the mixture of step a) contains further ingredients, selected from the group comprising malt, bran, cereal flakes, linseed, sesame seeds, sunflower seeds, soya seeds.

11. The process according to any one of the preceding claims, wherein said malt is present in the sheet of dough referred to step c) in an amount comprised between 0.5 and 3.5 % and consists of malted soft- wheat flour.

12. The process according to any one of the preceding claims, wherein the mixture in step a) comprises food additives commonly used in the production of bakery products and in particular bakery improvers, such as malted and non-malted natural bioactivators.

## Patentansprüche

1. Verfahren zur Herstellung einer Backware, die im Inneren eine Croissantähnliche Beschaffenheit hat und eine Kruste ähnlich wie Brot aufweist, welches Verfahren die folgenden Schritte umfasst:
a) das Kneten einer Mischung umfassend Weizenmehl, Wasser, Salz, Zucker, Hefe;
b) das Ausrollen des in Schritt a) erhaltenen Teiges, um ein Teigblatt mit einer vorbestimmten Dicke zu erhalten;
c) das Einarbeiten von mindestens einem pflanzlichen Fett in das Teigblatt durch Faltungs- und Ausrollvorgänge;
d) das Unterziehen des in Schritt c) erhaltenen Teigblattes nach der Wiederherstellung der vorbestimmten Dicke von Formungsvorgängen, um auf diese Weise Croissant-förmige Halbfertigwaren zu erhalten; und
e) das Unterziehen der Halbfertigwaren einer Aufgehphase;
wobei das mindestens eine pflanzliche Fett 10,0 bis 14,0 Gew.-%, bezogen auf das Gesamtgewicht des in Schritt c) erhaltenen Teigblattes, ausmacht, und wobei der Zucker Saccharose ist und 2,0 bis 4,0 Gew.-%, bezogen auf das Gesamtgewicht des in Schritt c) erhaltenen Teigblattes, ausmacht.

2. Verfahren nach Anspruch 1, wobei das mindestens eine pflanzliche Fett 11,0 bis 14,0 Gew.-%, vorzugsweise 12,0 bis 13,0 Gew.-%, bezogen auf das Gesamtgewicht des in Schritt c) erhaltenen Teigblattes, ausmacht.

3. Verfahren nach Anspruch 1 oder 2, umfassend als einen abschließenden Schritt das Backen in einem Ofen.

4. Verfahren nach einem der Ansprüche 1 bis 3, welches weiterhin einen Einfrierschritt nach dem Aufgehschritt umfasst.

5. Verfahren nach einem der Ansprüche 1 bis 4, umfassend einen Ruheschritt c') nach dem Ende der Faltungs- und Ausrollvorgänge in Schritt c) sowie vor dem Formungsschritt d).

6. Verfahren nach Anspruch 5, wobei der Ruheschritt c') eine Dauer zwischen 7 und 12 Minuten hat.

7. Verfahren nach einem der vorhergehenden Ansprüche, umfassend einen Schritt d'), bei dem schräge Schnitte in die Oberfläche der Halbfertigwaren eingebracht werden.

8. Verfahren nach einem der vorhergehenden Ansprüche, wobei das mindestens eine pflanzliche Fett aus einer Mischung von pflanzlichen Fetten und Ölen, welche für die Herstellung von gewalzten Teigen geeignet sind (pflanzliche Fette/Öle für das Einarbeiten durch wiederholtes Falten und Ausrollen), vorzugsweise einer pflanzlichen Margarine und insbesondere einer pflanzlichen Margarine eines "Typs für das Einarbeiten durch wiederholtes Falten und Ausrollen", die frei von gehärteten Fetten ist, besteht.

9. Verfahren nach einem der vorhergehenden Ansprüche, wobei die Hefe Bierhefe oder Sauerteig-Anstellgut ist und in dem in Schritt c) erwähnten Teigblatt in einer Menge von vorzugsweise zwischen 1,0 und 3,0 Gew.-%, bezogen auf das Gesamtgewicht, enthalten ist.

10. Verfahren nach einem der vorhergehenden Ansprüche, wobei die Mischung in Schritt a) weitere Bestandteile, gewählt aus der Gruppe, umfassend Malz, Kleie, Getreideflocken, Leinsaat, Sesamsamen, Sonnenblumenkernen und Sojasamen, enthält.

11. Verfahren nach einem der vorhergehenden Ansprüche, wobei das Malz in dem in Schritt c) erwähnten Teigblatt in einer Menge von zwischen 0,5% und 3,5% enthalten ist und aus gemälztem Weichweizenmehl besteht.

12. Verfahren nach einem der vorhergehenden Ansprüche, wobei die Mischung in Schritt a) Lebensmittelzusatzstoffe, welche bei der Herstellung von Backwaren häufig verwendet werden, und insbesondere Backhilfsmittel, wie zum Beispiel gemälzte und nicht gemälzte, natürliche Bioaktivatoren, umfasst.

## Revendications

1. Procédé pour la production d'un produit de boulangerie ayant une partie interne avec une texture de type croissant et une croûte similaire à celle du pain, qui comprend les étapes :
a) malaxer un mélange comprenant de la farine de blé, de l'eau, du sel, du sucre, de la levure ;
b) rouler la pâte obtenue à partir de l'étape a) pour obtenir une couche de pâte d'une épaisseur prédéterminée ;
c) incorporer dans ladite couche de pâte au moins une matière grasse végétale au moyen d'opérations de pliage et de roulage ;
d) soumettre la couche de pâte obtenue à partir de l'étape c), après la restauration de ladite épaisseur prédéterminée, à des opérations de mise en forme, obtenant ainsi des produits semi-finis en forme de croissant ;
e) soumettre lesdits produits semi-finis à un levage ; dans lequel ladite au moins une matière grasse végétale constitue de 10,0 à 14,0 % en poids du poids total de ladite couche de pâte obtenue à partir de l'étape c) et dans lequel ledit sucre est le sucrose et constitue de 2,0 à 4,0 % en poids du poids total de ladite couche de pâte obtenue à partir de l'étape c).

2. Procédé selon la revendication 1, dans laquelle ladite au moins une matière grasse végétale constitue de 11,0 à 14,0 %, de préférence de 12,0 à 13,0 %, en poids du poids total de ladite couche de pâte obtenue à partir de l'étape c).

3. Procédé selon la revendication 1 ou 2, comprenant une étape finale de cuisson dans un four.

4. Procédé selon l'une quelconque des revendications 1 à 3, qui comprend en outre une étape de congélation après l'étape de levage.

5. Procédé selon l'une quelconque des revendications 1-4, comprenant une étape de repos c') à la fin des opérations de pliage et de roulage de l'étape c) et avant ladite étape de mise en forme d).

6. Procédé selon la revendication 5, dans lequel l'étape de repos c') a une durée comprise entre 7 et 12 minutes.

7. Procédé selon l'une quelconque des revendications précédentes, comprenant une étape d'), dans laquelle des découpes obliques sont pratiquées sur la surface desdits produits semi-finis.

8. Procédé selon l'une quelconque des revendications précédentes, dans lequel ladite au moins une matière grasse végétale est constituée par un mélange de matières grasses et d'huiles végétales adéquates pour la production de pâtes roulées (« matières grasses/huiles roulées végétales »), de préférence une margarine végétale, et en particulier une margarine végétale de type « à rouler », exempte de matières grasses hydrogénées.

9. Procédé selon l'une quelconque des revendications précédentes, dans lequel ladite levure est une levure de bière ou un starter pour levain et est présente dans la couche de pâte à laquelle il est fait référence à l'étape c) en une quantité de préférence comprise entre 1,0 et 3,0 % en poids du poids total.

10. Procédé selon l'une quelconque des revendications précédentes, dans lequel le mélange de l'étape a) contient des ingrédients supplémentaires, sélectionnés dans le groupe comprenant le malt, le son, les flocons de céréales, les graines de lin, les graines de sésame, les graines de tournesol, les graines de soja.

11. Procédé selon l'une quelconque des revendications précédentes, dans lequel ledit malt est présent dans la couche de pâte à laquelle il est fait référence à l'étape c) en une quantité comprise entre 0,5 et 3,5 % et est constitué par de la farine de blé tendre maltée.

12. Procédé selon l'une quelconque des revendications précédentes, dans lequel le mélange à l'étape a) comprend des additifs alimentaires utilisés fréquemment dans la production de produits de boulangerie et en particulier des agents améliorateurs de boulangerie, tels que des bio-activateurs naturels maltés et non maltés.
